Europäisches Patentamt

European Patent Office

Office européen des brevets

(19)

(11) Veröffentlichungsnummer: **0 519 092 A1**

## (12) EUROPÄISCHE PATENTANMELDUNG

(21) Anmeldenummer: **91109837.4**

(22) Anmeldetag: **15.06.91**

(51) Int. Cl.⁵: **G01N 21/64**, G01N 21/63, G01S 17/06

(43) Veröffentlichungstag der Anmeldung:
**23.12.92 Patentblatt 92/52**

(84) Benannte Vertragsstaaten:
**DE FR GB IT NL**

(71) Anmelder: **SOVETSKO- AMERIKANSKOE
SOVMESTNOE PREDPRIYATIE " DIALOG"**
Zagorie, ulitsa Yagodnaya, 17
Moskau(SU)

(72) Erfinder: **Kamalov, Valei Fenovich**
ulitsa Ramenka, 9, Korpus 1, kv.17
Moscow(SU)
Erfinder: **Toleutaev, Bulat Nurmakovich**
Leninskie gory, MGU, korpus D, komnata 332

Moscow(SU)
Erfinder: **Shkurinov, Alexandr Pavlovich**
Lomonosovsky prospekt, 23, kv.413
Moscow(SU)
Erfinder: **Ainbund, Mikhail Ruvimovich**
Manchesterskaya, 6, kv.10
Leningrad(SU)
Erfinder: **Menshikov, Georgy Alexandrovich**
prospekt Bolshevikov, 3, korpus 1, kv.15
Leningrad(SU)

(74) Vertreter: **Sparing Röhl Henseler**
Patentanwälte European Patent Attorneys
Rethelstrasse 123
W-4000 Düsseldorf 1(DE)

(54) **Einrichtung zur Bestimmung von Raum- und Zeitkennlinien der schwachen optischen Emission eines Objektes.**

(57) Die Einrichtung zur Bestimmung von Raum- und Zeitkennlinien der schwachen optischen Emission eines Objektes enthält einen optischen Impulsstrahler (1) zur Bestrahlung des zu untersuchenden Objektes, einen Fotovervielfacher (3) mit einer als Verzögerungsleitung (6) ausgeführten Anode, der eine Objektemission registert, und zwei Zeit-Amplituden-konverter (11,12), deren Starteingänge (13 bzw.14) an den Ausgang eines Impulsformers elektrischer, mit Impulsen des Strahlers (1) synchroner Impulse und Stoppeingänge (9 bzw.10) an Eingänge der Additionsschaltung (19) bzw. der Subtraktionsschaltung (20) angeschlossen sind, deren Ausgänge mit einer Einheit (23) zur Datenspeicherung und -verarbeitung verbunden sind.

EP 0 519 092 A1

Die Erfindung bezieht sich auf eine Einrichtung zur Bestimmung von Kennlinien der schwachen optischen Emission, deren Dauer im Piko- und Nanosekundenbereich liegt. Die Erfindung kann in der optischen Spektroskopie zu Untersuchungen in der Medizin, der Mikrobiologie, der Mikroelektronik, der Geologie usw., z.B. zur Erforschung von Prozessen der Relaxation der Energie einer optischen Erregung in Atomen, Molekülen und Kristallen zum Einsatz kommen. Mit Hilfe der Erfindung kann man Informationen über die Lebensdauer erregter Elektronenzustände der Moleküle in Lösungen, über die Relaxationsgeschwindigkeiten von Trägern in Kristallen, über die Ablaufkanäle photochemischer Umwandlungen usw. erhalten. Außerdem ist es unter Anwendung ausreichend leistungsstarker Strahlungsquellen und entsprechender optischer Einrichtungen möglich, auf Grundlage der Erfindung ein System zur Untersuchung weit entfernter Objekte, z.B. zur Bestimmung der Abmessungen und der Lage von Raumflugkörpern bzw. zum Sondieren von Reliefmakroobjekten zu schaffen.

Es ist eine Einrichtung zur Bestimmung von Zeitkennlinien der schwachen optischen Emission mit einem Impulslaser, im Wege dessen Strahls ein Halter für das zu untersuchende Objekt angeordnet ist, einem Photovervielfacher, einer Fotodiode und einem Zeit-Amplitudenkonverter bekannt, dessen Ausgang an einen Mehrkanalanalysator angeschlossen ist (Kvantovaya elektronika, Moskau, 1987, Bd.14, Nr.6, V.F.Kamalov u.a., "Lazerny subnanosekundny fluorestzentny spektrometr so schetom odinochnykh fotonov", S. 1303 bis 1308). Vor der Fotokathode des Fotovervielfachers ist ein Monochromator mit regelbarer Tellenlänge angeordnet. Der Starteingang des Zeit-Amplitudenkonverters ist mit dem Ausgang der Fotodiode und der Stoppeingang über einen Diskriminator mit der Anode des Fotovervielfachers verbunden. Der Laserstrahl wird auf die Fotodiode und auf das Prüfobjekt gerichtet, wodurch dessen Leuchten bewirkt wird. Eine Strahlung vom Objekt mit jener Wellenlänge, worauf der Monochromator eingestellt worden ist, wird durch den Fotovervielfacher in elektrische Signale transformiert. Der Zeit-Amplitudenkonverter erzeugt eine Spannung, die zur Verzögerung einer Lichtquantemission durch das Objekt in bezug auf den Zeitpunkt seiner Bestrahlung (der durch einen Impuls von der Fotodiode bestimmt wird) proportional ist. Der Mehrkanalanalysator speichert Meßergebnisse in einem Kanal, der dem Wert einer gemessenen Verzögerung entspricht. Nachdem eine ausreichende Menge von Signalen aus dem Ausgang des Zeit-Amplitudenkonverters gespeichert worden ist, gibt der Mehrkanalanalysator eine Amplituden-Zeitkennlinie der zu untersuchenden Strahlung auf einer festgelegten Wellenlänge aus.

Es ist eine Einrichtung zur Bestimmung von Raumkennlinien der Quellen der schwachen Leuchten bekannt (Review of Scientific Instruments, V.58, No.12, 1987, M.Lampton et al "Delay line anodes for microchannel-plate spectrometers" p.2298-2305), enthaltend einen Fotodetektor mit Mikrokanalplatten und ein Anodensystem in der Form einer Verzögerungsleitung, an deren Enden über Diskriminatoren der Start- und der Stoppeingang eines Zeitspannenmessers angeschlossen sind. Die Strahlung vom zu untersuchenden Objekt initiiert aus einem bestimmten Fotokathodenpunkt des Detektors eine lokalisierte Ladung, die in jenen Punkt der Verzögerungsleitung gelangt, deren Koordinate der Koordinate der Ladungsbildung auf der Fotokathode und folglich der Koordinate eines Leuchtpunktes am Objekt entspricht. Die in der Verzögerungsleitung entstandene lokalisierte Ladung erzeugt zwei elektrische Impulse, die sich zu deren Enden hin ausbreiten. Der Zeitspannenmesser wird durch den einen von den besagten Impulsen gestartet und durch den anderen gestoppt. Die gemessene Zeitspanne zwischen Zeitpunkten, zu denen elektrische Impulse an die Enden der Verzögerungsleitung gelangen, stellt das Maß einer Raumkoordinate auf der Fotokathode dar, wohin ein Photon vom zu untersuchenden Objekt gelangt ist. Durch Speicherung der Meßergebnisse kann man Informationen über eine räumliche Verteilung der Intensität eines Leuchtens erhalten.

Jede der vorstehend betrachteten Einrichtungen läßt also nur eine Kennlinie der schwachen optischen Emission, d.h. entweder eine räumliche oder eine zeitliche ermitteln. Zur Untersuchung von Objekten, deren Leuchten seine räumlichen Koordinaten im Laufe der Zeit ändert oder eine Überlagerung von mehreren in der Zeit getrennten Komponenten darstellt, ist aber eine gleichzeitige Messung der räumlichen und der zeitlichen Kennlinien einer Strahlung erforderlich. So besteht z.B. eine wichtige Aufgabe der optischen Spektroskopie in einer Trennung des Raman-Spektrums, der Fluoreszenz und der Phosphoreszenz, die von Molekülen mit verschiedenen Verzögerungen nach einer Impulserregung ausgestrahlt werden. Außerdem können sich Emissionsspektren in der Zeit infolge Strukturumwandlungen bzw.einer Energierelaxation ändern. Es ist unmöglich, diese Aufgabe durch sequentielle Messung zuerst der räumlichen und danach der zeitlichen Kennlinien zu lösen.

Es ist auch eine Einrichtung zur Bestimmung von Kennlinien der schwachen optischen Emission bekannt (Review of scientific instruments V.58, No.9, 1987, W.G.McMullan et al "Simultaneous subnanosecond timing information and 2D spatial information from imaging photomultiplier tubes", p.1626-1628 ), mit deren Hilfe man eine zeitliche und eine räumliche Information über eine zu untersuchende Strahlung gleichzeitig erhält. Diese Einrichtung enthält einen Fotovervielfacher mit Mikrokanalplatten und eine zweidimensionale Widerstandsanode, die grundsätzlich gesehen eine Verzögerungsleitung darstellt. Die Anode weist zweit Anschlußpaare auf, die auf ihren Enden in zwei gegenseitig senkrechten Richtungen angeordnet sind. Die Anodenanschlüsse sind mit einem lokalisierenden Computer verbunden, der an einen Personalcomputer angeschlossen ist.

Außerdem enthält die Einrichtung einen Impulslaserstrahler zur Bestrahlung eines in einem Halter befestigten Objektes, eine Lawinenfotodiode, worauf ein Teil der Impulslaserstrahlung abgeleitet wird, und einen Zeit-Amplitudenkonverter, der über einen Impulsamplitudenanalysator an einen zweiten Personalcomputer angeschlossen ist. Ein an den Starteingang des Zeit-Amplitudenkonverters gelegtes Signal wird von einem RC-Glied abgegriffen, das an die Ausgangselektrode einer Mikrokanalplatte des Fotovervielfachers angeschlossen ist, und der Stoppeingang des Zeit-Amplitudenkonverters ist über einen Verstärker und einen Diskriminator an den Ausgang der Lawinenfotodiode angeschlossen, worin elektrische mit Laserimpulsen synchrone Impulse erzeugt werden. Da der Impuls von der Mikrokanalplatte eine positive Polarität und eine sehr kleine Amplitude aufweist, sind zwischen das RC-Glied und der Stoppeingang des Zeit-Amplitudenkonverters Verstärker, ein Inverter und ein Diskriminator geschaltet.

Der lokalisierende Computer ermittelt eine zweidimensionale Raumkoordinate der Strahlungsquelle oder bei einer spektroskopischen Anwendung der Einrichtung, falls die zu untersuchende Strahlung über die Wellenlänge auf der Fotokathode des Fotovervielfachers linear dispergiert wird, werden Meßergebnisse auf der einen Achse zur Gewinnung von Daten über eine Wellenlänge verwendet. Der Personalcomputer speichert und verarbeitet Meßergebnisse und gibt das Spektrum der zu untersuchenden Strahlung bzw. die Raumkoordinaten der Strahlungsquelle aus.

Der Zeit-Amplitudenkonverter erzeugt eine Spannung, die zu einer Zeitspanne zwischen dem Zeitpunkt einer Objektbestrahlung und dem Erscheinen eines elektrischen Signals im Fotovervielfacher proportional ist, das gleichzeitig mit Emission eines Lichtquantes durch das Object entsteht. Eine Spannung am Ausgang des Zeit-Amplitudenkonverters wird im Impulsamplitudenanalysator digitalisiert, die Ergebnisse werden in den zweiten Personalcomputer eingegeben und als eine Amplituden-Zeit-Kennlinie dargestellt.

Ein Nachteil der Einrichtung besteht im komplizierten Aufbau, weil sie zwei voneinander unabhängige Meßkanäle aufweist, von denen der eine Signale von der Anode des Fotovervielfachers auswertet zur Bestimmung räumlicher Kennlinien der Strahlung und der andere Signale von der Elektrode einer Mikrokanalplatte auswertet zur Bestimmung der zeitlichen Kennlinien. Da diese Kanäle keine gegenseitige Synchronisierung aufweisen, können im Kanal zur Bestimmung der Raumkoordinaten (d.h. von der Anode des Fotovervielfachers) Rauschimpulse registriert werden. Diese Rauschimpulse können als Nutzsignal ausgewertet werden und folglich einen Meßfehler bewirken.

Außerdem stellt die Einrichtung keine ausreichende Genauigkeit bei Ermittlung auch der zeitlichen Kennlinien der Strahlung sicher, weil als Zeitgebersignal im "Zeit"-Meßkanal ein Impuls von der Elektrode einer Mikrokanalplatte des Fotovervielfachers verwendet wird. Dieser Impuls weist eine kleine Amplitude auf und bedarf einer weiteren Verstärkung, wodurch letzten Endes ein Signal, das eine Information über Zeitkennlinien einer Strahlung beinhaltet, am Rauschpegel nur schwer erkennbar sein kann. Des weiteren liegt der Ausgang einer Mikrokanalplatte, wovon ein Zeitgebersignal abgegriffen wird, unter einem Potential in bezug auf das Gehäuse der Einrichtung (der Anode des Fotovervielfachers), wodurch die Bedienung der Einrichtung erschwert ist.

Der Erfindung liegt die Aufgabe zugrunde, eine Einrichtung zur Bestimmung von Zeit- und Raumkennlinien der schwachen optischen Emission eines Objektes zu schaffen, bei der zum Gewinnen von räumlichen und zeitlichen Daten der zu untersuchenden Strahlung ein einheitlicher Meßkanal dient, der als Datensignale Signale von der Anode des Fotovervielfachers auswertet, die als Verzögerungsleitung ausgeführt ist, so daß eine Vereinfachung der Einrichtung und eine Steigerung der Meßgenauigkeit erzielt und keine Rauschsignale aufgezeichnet werden.

Diese Aufgabe wird bei einer Einrichtung zur Bestimmung von Zeit- und Raumkennlinien der schwachen optischen Emission eines Objektes mit einem Halter für das zu untersuchende Objekt, einem optischen Impulsstrahler zur Bestrahlung des zu untersuchenden Objektes unter Erzeugung der schwachen optischen Emission von diesem Objekt, einem Fotovervielfacher mit einer als Verzögerungsleitung ausgeführten Anode zur Umwandlung der schwachen optischen Emission vom zu untersuchenden Objekt in elektrische Signale, einem Impulsformer elektrischer, mit Impulsen des optischen Strahlers synchroner Impulse, einem Zeit-Amplitudenkonverter, dessen ein Eingang mit Ausgängen des elektrischen Impulsformers verbunden ist, und einer Einheit zur Datenspeicherung und -verarbeitung, erfindungsgemäß dadurch gelöst, daß sie eine Additionsschaltung, eine Subtraktionsschaltung und einen zweiten Zeit-Amplitudenkonverter enthält, dessen einer Eingang mit dem Ausgang des elektrischen Impulsformers und dessen anderer Eingang mit dem einen Ende der Verzögerungsleitung verbunden ist, der andere Eingang des ersten Zeit-Amplitudenkonverters mit dem anderen Ende der Verzögerungsleitung,Ausgänge der Zeit-Amplitudenkonverter mit Eingängen der Additionsschaltung und mit Eingängen der Subtraktionsschaltung verbunden und der Ausgang der Additionsschaltung und der Ausgang der Subtraktionsschaltung an die Eingänge der Einheit zur Datenspeicherung und -verarbeitung angeschlossen sind.

Der in der Einrichtung vorgesehene zweite Zeit-Amplitudenkonverter sowie eine Additions- und eine Subtraktionsschaltung, die an die Ausgänge der beiden Zeit-Amplitudenkonverter angeschlossen sind, stellen in der Einrichtung den Aufbau eines einheitlichen Meßkanals zum Gewinnen von räumlichen und zeitlichen Informationen über die zu untersuchende optische Emission sicher. Dabei dienen in dem besagten Meßkanal als Datensignale, die den Zeit-Amplitudenkonvertern zugeführt werden, Signale von Enden der Verzögerungsleitung, d.h. der Anode des Fotovervielfachers. In diesem Falle entsteht, wie dies nachstehend in der ausführlichen Beschreibung der Erfindung gezeigt wird, am Ausgang der Additionsschaltung ein Signal, das zur Verzögerung einer Photonemission durch das zu untersuchende Objekt in bezug auf den Erregungsimpuls des optischen Strahlers proportional ist, und am Ausgang der Subtraktionsschaltung entsteht ein Signal, das zur räumlichen Koordinate der Emissionsquelle proportional ist. Da die Einrichtung einen einheitlichen Meßkanal enthält, ist ihre Schaltung vereinfacht. Die Genauigkeit einer Bestimmung der zeitlichen Kennlinien einer Emission in der erfindungsgemäßen Einrichtung wird erstens dadurch gesteigert, daß das Signal von der Anode des Fotovervielfachers (im Unterschied von einem Signal von der Elektrode einer Mikrokanalplatte) eine zur sicheren Aufzeichnung ausreichende Amplitude hat. Zum anderen bewirkt die Synchronisierung der zwei Zeit-Amplitudenkonverter mit Hilfe ein und desselben Impulsformers eine Rauschpegelsenkung, weil ein Zeit-Amplitudenkonverter ein Signal in einem engen Zeitbereich registriert. Eine Synchronisation der Zeit-Amplitudenkonverter bewirkt auch die Anpassung der Ergebnisse einer Messung von Raum- und Zeitkoordinaten an ein und dasselbe Ereignis - Registrierung eines Strahlungsphotons.

Nachstehend wird die Erfindung durch ausführliche Beschreibung eines Beispiels ihrer Ausführung unter Bezugnahme auf eine Zeichnung näher erläutert, worin das Blockschaltbild der erfindungsgemäßen Einrichtung zur Bestimmung von Raum- und Zeitkennlinien der schwachen optischen Emission eines Objektes dargestellt ist.

Die Einrichtung zur Bestimmung von Raum- und Zeitkennlinien der schwachen optischen Emission eines Objektes enthält einen optischen Impulsstrahler, z.B. einen Impulslaser 1, eine Fotodiode 2 und einen Fotovervielfacher 3 zur Registrierung der zu untersuchenden Strahlung, wobei der letztere eine Fotokathode 4 einschließt, ein Vervielfachungssystem 5, z.B. Mikrokanalplatten und eine Anode in der form einer Verzögerungsleitung 6. Enden 7 und 8 der Verzögerungsleitung 6 sind an Stoppeingänge 9 und 10 der Zeit-Amplitudenkonverter 11 bzw. 12 angeschlossen. Starteingänge 13 und 14 der Zeit-Amplitudenkonverter 11 bzw.12. sind an den Ausgang der Fotodiode 2 angeschlossen. Im Ausbreitungswege des Strahls des Lasers 1 befindet sich ein halbdurchlässiger Spiegel 15 bzw. eine andere Vorrichtung zur Strahltrennung in zwei Strahlen, von denen der eine auf die Fotodiode 2 und der andere auf ein zu untersuchendes Objekt, der in einem Halter 16 (z.B. einer Küvette, wenn eine Lösung untersucht wird, oder in einer Klemme, falls das Untersuchungsobjekt ein Festkörper ist) derart plaziert wird, daß die im Objekt durch den Laserstrahl erregte Emission auf die Fotokathode 4 des Fotovervielfachers 3 gelangt. Zur Gewinnung von spektralen Charakteristiken eines Objektleuchtens kann vor der Fotokathode 4 eine Polychromator 17 bzw. ein anderes dispergierendes Element angebracht werden. Zur Herstellung eines Objektbildes an der Fotokathode 4 bzw. auf dem Eintrittsspalt des Polychromators 17 (falls dieser vorhanden ist) dient eine Linse 18.

Anstelle einer Fotodiode 2 kann zur Erzeugung elektrischer, mit Impulsen des Lasers 1 synchroner Impulse ein Fotovervielfacher bzw. ein fotoelektrisches Gerät eines anderen Typs verwendet werden. Außerdem kann man anstelle eines Impulslasers 1 eine Impulsentladungsröhre bzw. eine kontinuierlich leuchtende Lampe mit einem optischen Modulator verwenden.

Erfindungsgemäß enthält die Einrichtung auch eine Additionsschaltung 19 und eine Subtraktionsschaltung 20, wobei Eingänge jeder der Schaltungen an Ausgänge der Zeit-Amplitudenkonverter 11 und 12 angeschlossen sind. Der Ausgang der Additionsschaltung 19 und der Ausgang der Subtraktionsschaltung 20 sind an Eingänge 21 bzw. 22 einer Einheit 23 zur Datenspeicherung und -verarbeitung angeschlossen. Diese Einheit kann z.B. ein Personalcomputer sein.

Die Einrichtung funktioniert wie folgt.

In den Halter 16 bringt man ein zu untersuchendes Objekt. Man schaltet den Laser 1, der Lichtimpulse mit einer kurzen Dauer (z.B. Pikosekundendauer) erzeugt. Ein Teil der Laserimpulsstrahlung wird vom halbdurchlässigen Spiegel 15 auf die Fotodiode 2 reflektiert, worin elektrische, mit Laserimpulsen synchrone Impulse erzeugt werden. Diese elektrischen Impulse gelangen an die Starteingänge 13 und 14 der Zeit-Amplitudenkonverter 11 und 12 und schalten diese ein. Die restliche Laserstrahlung kommt durch den Spiegel 15 und bestrahlt das Objekt, wodurch in diesem eine optische Impulsemission entsteht, deren Kennlinien zu bestimmen sind. Der Fotovervielfacher 3, der die besagte Emission registriert, funktioniert in der Monoelektronen Betriebsart. Ein Fotoelektron, das durch die Fotokathode 4 des Fotovervielfachers 3 emittiert wird, passiert das Vervielfachungssystem 5 und bildet eine elektrische Ladung, die in einen bestimmten Punkt der Verzögerungsleitung 6 gelangt, dessen Koordinate der Koordinate eines Punktes an der Fotokathode 4, woraus das Fotoelektron emittiert worden ist, und folglich der Koordinate eines Punktes am Objekt, woraus ein Photon der zu untersuchenden Strahlung emittiert worden ist,oder der Wellenlänge eines durch das Objekt emittierten Photons entspricht, falls in der Einrichtung ein Polychromator 17 vorgesehen ist.

Die elektrische Ladung auf der Verzögerungslinie 6 teilt sich in zwei Teile und breitet sich zu ihren Enden 7 und 8 hinaus, wobei Signale erzeugt werden, mit deren Hilfe die Zeit-Amplitudenkonverter 11 und 12 über ihre Stoppeingänge 9 bzw. 10 abgestellt werden. Jeder der Zeit-Amplitudenkonverter 11 und 12 stellt eine Vorrichtung dar, deren Ausgangsspannung zu einem Zeitintervall zwischen Signalen proportional ist, die auf ihren Starteingang und Stoppeingang gelegt werden . Dementsprechend ist die Ausgangsspannung $U_1$ des Zeit-Amplitudenkonverters 11 zu einem Zeitintervall $\Delta t$ + x/V und die Ausgangsspannung $U_2$ des Zeit-Amplitudenkonverters 12 zu einem Zeitintervall $\Delta t$ + (1-x)/V proportional, worin $\Delta t$ eine Zeitspanne zwischen einem Impuls der Fotodiode 2 und dem Erscheinen einer Ladung auf der Verzögerungsleitung 6, 1 Länge der Verzögerungsleitung 6, V Ausbreitungsgeschwindigkeit einer Ladung darüber und x Koordinate eines Punktes bedeuten, worauf die Ladung auf die Verzögerungsleitung gelangt ist, in diesem Falle ein Abstand von diesem Punkt bis zu ihren Ende 7. Die Spannung auf dem Ausgang der Subtraktionsschaltung 20, die einer Differenz $U_1$-$U_2$ gleich ist, ist zu 2x-l/V proportional, d.h. sie beinhaltet eine Information über die Koordinate x, der eine Koordinate der Quelle eines Leuchtens entspricht. Die Additionsschaltung 19 summiert die Spannungen $U_1$ und $U_2$ und gibt am Ausgang eine Spannung aus, die zu 2 $\Delta t$ + + l/V proportional ist, d.h. eine Information über den Erscheinungszeitpunkt am Fotovervielfacher 3 eines Photons der zu untersuchenden optischen Emission in bezug auf einen Laserimpuls beinhaltet, der dieses Photon ausgelöst hat. Ausganssignale der Additionsschaltung 19 und der Subtraktionsschaltung 20 werden an die Eingänge 21 bzw.22 der Einheit 23

zur Datenspeicherung und -verarbeitung zugeführt, wo diese Signale gespeichert werden. Falls in der Einrichtung ein Polychromator 17 vorhanden ist, erhält man anstelle von räumlichen Koordinaten einer Emission ihre Spektralcharakteristik, weil infolge einer Dispersion der zu untersuchenden Strahlung die Koordinate eines Erscheinungspunktes, eines Photons auf der Fotokathode 4 durch die Wellenlänge dieses Photons bestimmt wird.

Da die Impulse der Fotodiode 2 als Startsignale für die beiden Zeit-Amplitudenkonverter 11 und 12 verwendet werden und eine Aufzeichnung der Signale des Fotovervielfachers 3 durch die Zeit-Amplitudenkonverter in einem engen Zeitbereich erfolgt, gelangen in den Meßkanal keine Rauschimpulse, die außerhalb dieses Bereichs liegen. Wenn z.B. die Menge von Rauschimpulsen eines Fotovervielfachers $10^3$ pro Sekunde beträgt und der Konvertierungsbereich der Zeit-Amplitudenkonverter 100 Nanosekunden beträgt, ist die Wahrscheinlichkeit der Aufzeichnung der Rauschimpulse bedeutend kleiner als die Ablesung pro Sekunde sogar bei einer hohen Impulsfolgefrequenz des Impulslaserstrahlers von $10^4...10^5$ Hz. Dies gewährleistet eine hohe Meßgenauigkeit.

Es ist offensichtlich, daß zur Bestimmung zweidimensionaler Raumkennlinien der zu untersuchenden Strahlung der Fotovervielfacher 3 mit einer (nicht eingezeichneten) Verzögerungsleitung versehen sein kann, die senkrecht zur Verzögerungsleitung 6 angeordnet ist. Außerdem sollen in diesem Falle in die Einrichtung entweder ein zusätzliches Paar Zeit-Amplitudenkonverter, deren Stoppeingänge an Enden der zweiten Verzögerungsleitung angeschlossen sind, und eine zusätzliche Subtraktionsschaltung, deren Eingänge an den Ausgängen dieser Zeit-Amplitudenkonverter angeschlossen sind, oder ein Zeit-Amplitudenkonverter eingeführt werden, dessen Eingänge mit Enden der zweiten Verzögerungsschaltung verbunden sind.

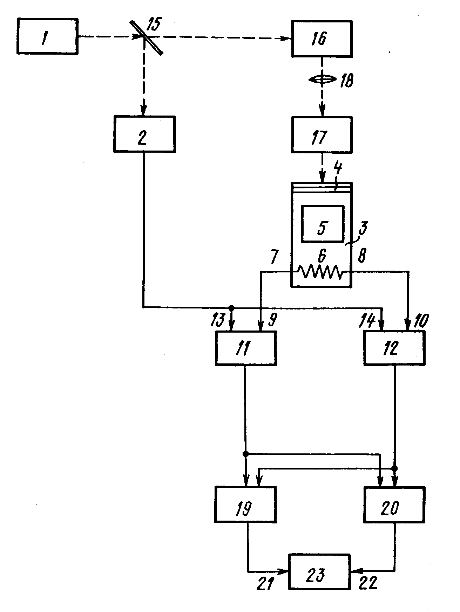

**Patentansprüche**

1. Einrichtung zur Bestimmung von Raum- und Zeitkennlinien der schwachen optischen Emission eines Objektes mit einem Halter (16) für das zu untersuchende Objekt, einem optischen Impulsstrahler (1) zur Bestrahlung des zu untersuchenden Objektes unter Gewinnung einer Schwachen optischen Emission von diesem Objekt, einem Fotovervielfacher (3) mit einer als Verzögerungsleitung (6) ausgeführten Anode zur Umwandlung der schwachen optischen Emission vom zu untersuchenden Objekt in elektrische Signale, einem Impulsformer (2) elektrischer, mit Impulsen des optischen Impulsstrahlers (1) synchroner Impulse, einem Zeit-Amplitudenkonverter (11), dessen einer Eingang mit dem Ausgang des elektrischen Impulsformers (2) verbunden ist, und einer Einheit (23) zur Datenspeicherung und -verarbeitung, **dadurch gekennzeichnet,** daß sie eine Additionsschaltung (19), eine Subtraktionsschaltung (20) und einen zweiten Zeit-Amplitudenkonverter (12) enthält, dessen einer Eingang (14) mit dem Ausgang des elektrischen Impulsformers (2) und dessen anderer Eingang (10) mit einem Ende (8) der Verzögerungsleitung (6) verbunden sind, wobei der andere Eingang (9) des ersten Zeit-Amplitudenkonverters (11) mit dem anderen Ende (7) der Verzögerungsleitung (6) verbunden ist, Ausgange der Zeit-Amplitudenkonverter (11, 12) an Eingänge der Additionsschaltung (19) und an Eingänge der Subtraktionsschaltung (20), und der Ausgang der Additionsschaltung (19) und der Ausgang der Subtraktionsschaltung (20) an Eingänge (21,22) der Einheit (23) zur Datenspeicherung und -verarbeitung angeschlossen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-2 177 195 (HAMAMATSU PHOTONICS K.K.) <br> * Ansprüche 1-7 * <br><br> ----- | 1 | G01N21/64 <br> G01N21/63 <br> G01S17/06 |
| | | | **RECHERCHIERTE SACHGEBIETE (Int. Cl.5 )** <br><br> G01N <br> G01S <br> H01J |

Der vorliegende Recherchenbericht wurde für alle Patentansprüche erstellt

| Recherchenort | Abschlußdatum der Recherche | Prüfer |
|---|---|---|
| DEN HAAG | 14 FEBRUAR 1992 | VAN DEN BULCKE E.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
    
& : Mitglied der gleichen Patentfamilie, übereinstimmendes
    Dokument

EPO FORM 1503 03.82 (P0403)